# EUROPEAN PATENT APPLICATION

(11) **EP 4 201 558 A1**
(43) Date of publication of application: **28.06.2023**
(21) Application number: 20954104.4
(22) Date of filing: 17.09.2020
(51) Int. Cl.: B23B 21/00, B23B 31/117

(54) **TOOL TURRET**

(71) Applicant: DMG Mori Co., Ltd., Yamatokoriyama-shi, Nara 639-1160 (JP)
(72) Inventor: KURIYA, Tatsuhiko, Yamatokoriyama-shi, Nara 639-1160 (JP); HIKITA, Isao, Yamatokoriyama-shi, Nara 639-1160 (JP); MIZUKOSHI, Kenichi, Yamatokoriyama-shi, Nara 639-1160 (JP); KAMIYA, Takahito, Yamatokoriyama-shi, Nara 639-1160 (JP)
(74) Representative: Isarpatent
(86) International application number: PCT/JP2020/035211
(87) International publication number: WO 2022/059118

(57) **Abstract**

A cutting tool rest (31) includes: a plurality of tool holding portions (210) that each hold a tool; and a base (33) provided with a plurality of tool holding portions (210), the base (33) being operable to move each of the tool holding portions (210) between a plurality of positions including a tool change position (J) for changing the tool and a workpiece processing position (K) for processing a workpiece. Each of the tool holding portions (210) has: a clamping mechanism portion (131) that is operated between a clamping state and an unclamping state when supplied with a hydraulic pressure, the clamping state being a state in which the tool is clamped, the unclamping state being a state in which the tool is unclamped; and a valve (220) that controls the hydraulic pressure to be supplied to the clamping mechanism portion (131). The cutting tool rest (31) further includes an actuator (240) that operates the valve (220) of the tool holding portion (210) positioned at the tool change position (J) when connected to the tool holding portion (210) positioned at the tool change position (J).

## Description

### TECHNICAL FIELD

The present invention relates to a cutting tool rest.

### BACKGROUND ART

For example, Japanese Patent Laying-Open No. 58-149151 (PTL 1) discloses a turret cutting tool rest. The turret cutting tool rest is provided with a tool holder attachment portion, an unclamping cylinder mechanism, and a clamping cylinder mechanism so as to attach a machining center tool as a lathe tool.

### CITATION LIST

### PATENT LITERATURE

PTL 1: Japanese Patent Laying-Open No. 58-149151

### SUMMARY OF INVENTION

### TECHNICAL PROBLEM

As disclosed in PTL 1 above, there has been known a cutting tool rest including a plurality of tool holding portions, each of the plurality of tool holding portions having a clamping mechanism portion that is operated between a clamping state and an unclamping state when supplied with a hydraulic pressure, the clamping state being a state in which a tool is clamped, the unclamping state being a state in which the tool is unclamped. In such a cutting tool rest, the hydraulic pressure needs to be supplied to the clamping mechanism portion of each of the tool holding portions via a path corresponding to a state in which the tool holding portion is operated, thereby arising such a concern that the cutting tool rest has a complicated structure.

Thus, it is an object of the present invention to solve the above-described problem, and to provide a cutting tool rest in which a hydraulic pressure supply mechanism for operating a clamping mechanism portion can be realized by a simple configuration.

### SOLUTION TO PROBLEM

A cutting tool rest according to the present invention includes: a plurality of tool holding portions that each hold a tool; and a base provided with the plurality of tool holding portions, the base being operable to move each of the tool holding portions between a plurality of positions including a tool change position for changing the tool and a workpiece processing position for processing a workpiece. Each of the tool holding portions has: a clamping mechanism portion that is operated between a clamping state and an unclamping state when supplied with a hydraulic pressure, the clamping state being a state in which the tool is clamped, the unclamping state being a state in which the tool is unclamped; and a valve that controls the hydraulic pressure to be supplied to the clamping mechanism portion. The cutting tool rest further has an actuator that operates the valve of the tool holding portion positioned at the tool change position when connected to the tool holding portion positioned at the tool change position.

According to the cutting tool rest thus configured, the valve is provided in each of the plurality of tool holding portions, the actuator is provided at a position corresponding to the tool change position, and the valve of the tool holding portion positioned at the tool change position is operated by the actuator. Thus, it is not necessary to provide respective actuators for the valves of the tool holding portions, with the result that the hydraulic pressure supply mechanism for operating the clamping mechanism portion can be constructed in a simple manner.

Preferably, the base is pivotable with respect to a first axis. The plurality of tool holding portions are provided side by side at the base in a peripheral direction of the first axis.

According to the cutting tool rest thus configured, the hydraulic pressure supply mechanism for operating the clamping mechanism portion can be constructed in a simple manner in the turret type cutting tool rest in which the plurality of tool holding portions are moved in the peripheral direction of the first axis.

Preferably, the valve has a valve element that extends with respect to a second axis parallel to the first axis and that switches a hydraulic pressure path when moved reciprocally in an axis direction of the second axis. The actuator has a piston that is disposed to face the valve of the tool holding portion positioned at the tool change position in the axis direction of the second axis and that is capable of pushing and advancing the valve element in one direction along the axis direction of the second axis.

According to the cutting tool rest thus configured, it is possible to readily realize a configuration in which the piston of the actuator and the valve element of the valve of the tool holding portion positioned at the tool change position face each other in response to a pivoting operation of the base.

Preferably, each of the plurality of tool holding portions is capable of holding a rotary tool. The clamping mechanism portion has: a first piston that is reciprocally moved with respect to a third axis in an axis direction of the third axis when supplied with the hydraulic pressure; a first facing portion and a second facing portion that face each other in the axis direction of the third axis; and a locking portion disposed between the first facing portion and the second facing portion. One of the locking portion and each of the first facing portion and the second facing portion is provided at the first piston. The first piston is reciprocally moved between a first piston position and a second piston position, the first piston position being a position at which the locking portion and the first facing portion are brought into contact with each other to operate the clamping mechanism portion into the clamping state in which the rotary tool is clamped, the second piston position being a position at which the locking portion and the second facing portion are brought into contact with each other to operate the clamping mechanism portion into the unclamping state in which the rotary tool is unclamped. The clamping mechanism portion further has a second piston that moves the first piston to a third piston position when supplied with the hydraulic pressure, the third piston position being located between the first piston position and the second piston position in the axis direction of the third axis. When the first piston is positioned at the third piston position, the clamping mechanism portion is maintained in the clamping state, and the locking portion is separated from the first facing portion and the second facing portion.

According to the cutting tool rest thus configured, by moving the first piston to the third piston position using the second piston, the clamped rotary tool can be rotated without bringing the locking portion into contact with the first facing portion and the second facing portion.

Preferably, the valve controls the hydraulic pressure to be supplied to the clamping mechanism portion so as to position the first piston at the third piston position in a position included in the plurality of positions and except for the tool change position.

According to the cutting tool rest thus configured, since the locking portion and each of the first facing portion and the second facing portion are not in contact with each other in the tool holding portion positioned at the workpiece processing position, the workpiece can be processed at the workpiece processing position while rotating the clamped rotary tool.

### ADVANTAGEOUS EFFECTS OF INVENTION

As described above, according to the present invention, there can be provided a cutting tool rest in which a hydraulic pressure supply mechanism for operating a clamping mechanism portion can be realized by a simple configuration.

### BRIEF DESCRIPTION OF DRAWINGS

Fig. 1 is a perspective view showing a machine tool.
Fig. 2 is a side view showing a tool change position in a cutting tool rest.
Fig. 3 is a side view showing a workpiece processing position in the cutting tool rest.
Fig. 4 is a cross sectional view showing the cutting tool rest.
Fig. 5 is another cross sectional view showing the cutting tool rest.
Fig. 6 is a perspective view showing a first tool holder for a rotary tool.
Fig. 7 is a perspective view showing a second tool holder for a stationary tool.
Fig. 8 is a cross sectional view showing the first tool holder in Fig. 6.
Fig. 9 is a cross sectional view showing the second tool holder in Fig. 7.
Fig. 10 is a cross sectional view showing the cutting tool rest (at the time of clamping) to which the first tool holder is attached.
Fig. 11 is a cross sectional view showing the cutting tool rest (at the time of workpiece processing) to which the first tool holder is attached.
Fig. 12 is a cross sectional view showing the cutting tool rest (at the time of unclamping) to which the first tool holder is attached.
Fig. 13 is a cross sectional view showing the cutting tool rest (at the time of clamping) to which the second tool holder is attached.
Fig. 14 is an enlarged cross sectional view showing a holder attachment portion in a range surrounded by a chain double-dashed line XIV in Fig. 4.
Fig. 15 is a cross sectional view showing the cutting tool rest when viewed in a direction of arrow on a line XV-XV in Fig. 11.
Fig. 16 is a cross sectional view showing steps of attaching and detaching the first tool holder to and from the holder attachment portion in the cutting tool rest in Fig. 15.
Fig. 17 is a rear view showing the cutting tool rest in Fig. 1.
Fig. 18 is a cross sectional view showing a valve (at the time of clamping) in Fig. 17.
Fig. 19 is a cross sectional view showing the valve (at the time of unclamping) in Fig. 17.
Fig. 20 is a cross sectional view showing the valve (at the time of workpiece processing) in Fig. 17.

### DESCRIPTION OF EMBODIMENTS

Embodiments of the present invention will be described with reference to figures. It should be noted that in the figures referred to below, the same or corresponding members are denoted by the same reference characters.

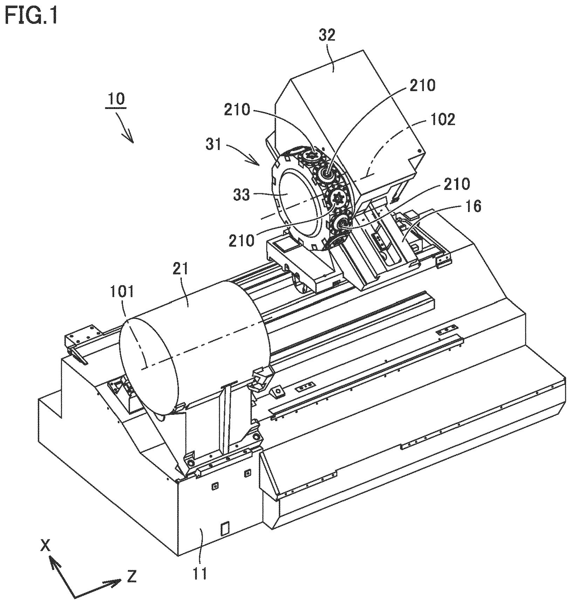

Fig. 1 is a perspective view showing a machine tool. In Fig. 1, an internal structure of the machine tool is shown by seeing through a cover body that forms an external appearance of the machine tool.

Referring to Fig. 1, a machine tool 10 according to the present embodiment is a lathe that performs workpiece processing by bringing a tool into contact with a workpiece that is being rotated. Machine tool 10 has a milling function of performing workpiece processing by bringing a tool that is being rotated into contact with a workpiece that is unmoved.

Machine tool 10 is an NC (Numerically Control) machine tool in which various types of operations for workpiece processing are automated through numerical control by a computer.

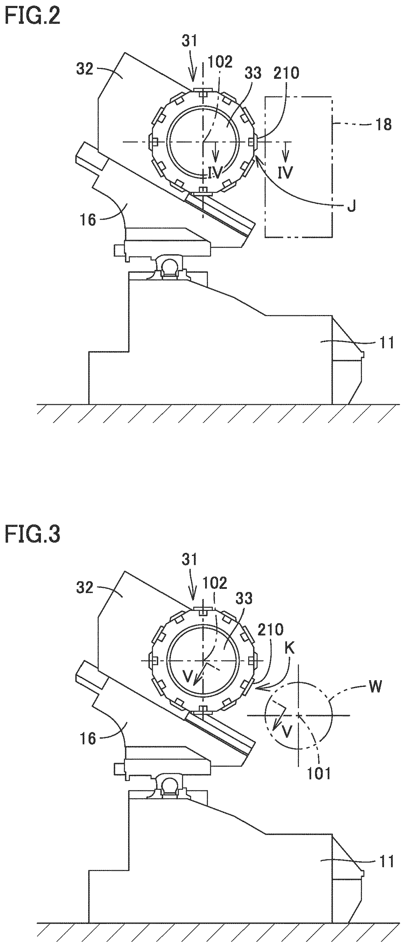

First, an overall structure of machine tool 10 will be described. Machine tool 10 has a bed 11, a headstock 21, a cutting tool rest 31, and an automatic tool changer 18 (see Fig. 2 described later).

Bed 11 is a base member for supporting headstock 21, cutting tool rest 31, automatic tool changer 18, and the like, and is installed on a floor surface of a factory or the like. Bed 11 is composed of a metal such as cast iron.

Headstock 21 is attached to bed 11. Headstock 21 has a spindle (not shown). The spindle is driven to rotate with respect to a center axis 101 parallel to a Z axis extending in a horizontal direction. The spindle has a tip provided with a chuck mechanism that can detachably hold a workpiece. The workpiece held by the chuck mechanism is rotated with respect to center axis 101 as the spindle is driven to rotate.

Cutting tool rest 31 is provided in a processing area defined and formed by the cover body (not shown). Cutting tool rest 31 is a turret type cutting tool rest, and is pivotable with respect to a pivoting center axis 102 (first axis) parallel to the Z axis.

Cutting tool rest 31 has a cutting tool rest base 32, a turret 33 (base), and a plurality of tool holding portions 210. A motor or the like for driving to pivot cutting tool rest 31 is attached to cutting tool rest base 32. Cutting tool rest base 32 is attached to a cross slide described later.

Turret 33 is provided to protrude from cutting tool rest base 32 in a direction toward headstock 21 in a Z axis direction. Turret 33 has a disk shape having a thickness direction corresponding to an axis direction of pivoting center axis 102. Turret 33 is pivotable with respect to pivoting center axis 102.

The plurality of tool holding portions 210 are provided at turret 33. The plurality of tool holding portions 210 are provided on an outer peripheral surface of turret 33. The plurality of tool holding portions 210 are provided side by side in a peripheral direction of pivoting center axis 102. Each of tool holding portions 210 is configured to hold a tool.

Cutting tool rest 31 is attached to bed 11 via a saddle 16 and the cross slide (not shown). Saddle 16 is movable in the Z axis direction by various types of feed mechanisms, guide mechanisms, servo motors, and the like. The cross slide is movable by the various types of feed mechanisms, guide mechanisms, servo motors, and the like in an X axis direction that is orthogonal to the Z axis and that is inclined with respect to a vertical direction. By respectively moving saddle 16 and the cross slide in the Z axis direction and the X axis direction, a position for processing the workpiece by a tool held by a tool holding portion 210 can be moved in a Z-X axes plane.

Fig. 2 is a side view showing a tool change position in the cutting tool rest.
Fig. 3 is a side view showing a workpiece processing position in the cutting tool rest.

Referring to Figs. 1 to 3, automatic tool changer (ATC) 18 has a double arm or the like that can grasp a tool, and is configured to change tools between cutting tool rest 31 inside the processing area and a tool magazine (not shown) outside the processing area. Automatic tool changer 18 is provided on the machine forward side of cutting tool rest 31.

Turret 33 is operable to move each of tool holding portions 210 between a plurality of positions including a tool change position J for changing a tool and a workpiece processing position K for processing a workpiece. Turret 33 is pivoted with respect to pivoting center axis 102 to move the plurality of tool holding portions 210 with respect to pivoting center axis 102 to a plurality of positions each displaced by an angle (30° in the present embodiment) obtained by dividing 360° by the number of the plurality of tool holding portions 210 (12 in the present embodiment).

As shown in Fig. 2, in order to change a tool on cutting tool rest 31 by automatic tool changer 18, a tool holding portion 210 that holds the tool to be changed is positioned at tool change position J in the figure. As shown in Fig. 3, in order to process workpiece W by a tool on cutting tool rest 31, a tool holding portion 210 that holds the tool to be used for the processing is positioned at workpiece processing position K in the figure.

It should be noted that each of tool change position J and workpiece processing position K is not particularly limited. For example, when automatic tool changer 18 is provided on the machine rear side, tool change position J may be a position displaced by 180° from workpiece processing position K shown in Fig. 3.

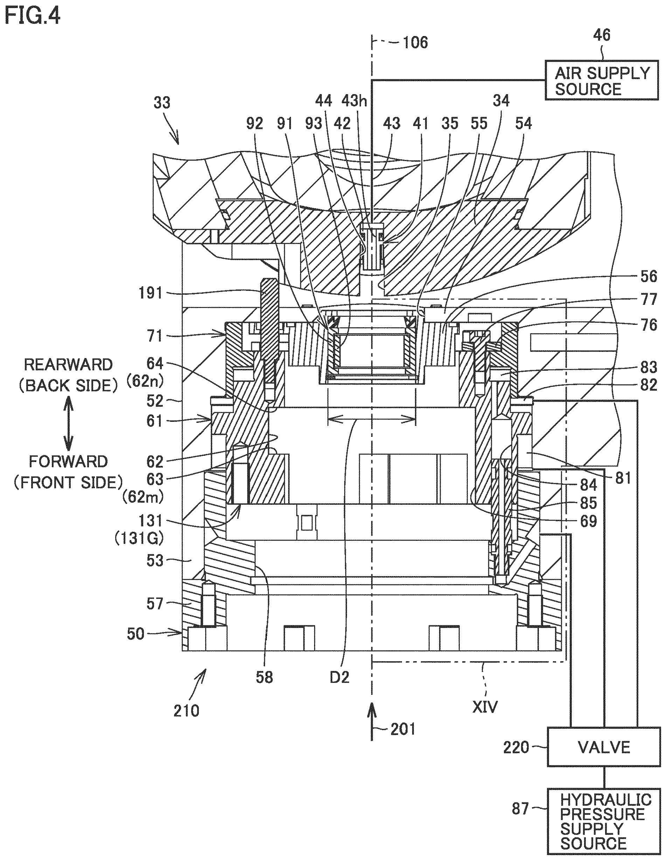

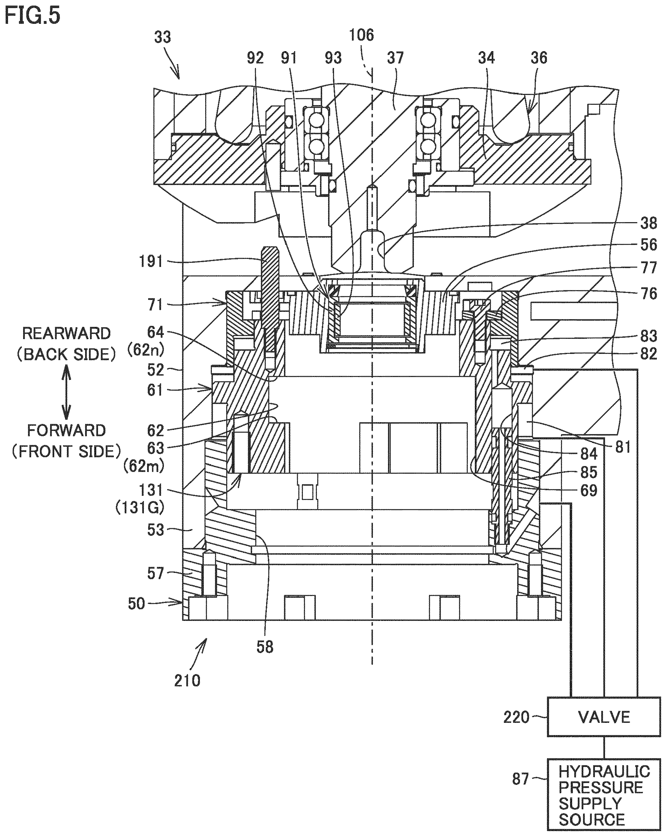

Next, a structure of cutting tool rest 31 on the turret 33 side will be described. Each of Figs. 4 and 5 is a cross sectional view showing the cutting tool rest. Each of Figs. 4 and 5 shows cutting tool rest 31 in a state in which a tool holder 121 described later is detached. The cross section shown in Fig. 4 corresponds to a cross section of cutting tool rest 31 at tool change position J when viewed in a direction of arrow on a line IV-IV in Fig. 2. The cross section shown in Fig. 5 corresponds to a cross section of cutting tool rest 31 at workpiece processing position K when viewed in a direction of arrow on a line V-V in Fig. 3.

Referring to Figs. 4 and 5, cutting tool rest 31 (turret 33) further has a ring member 34. Ring member 34 has a ring shape centered on pivoting center axis 102. Ring member 34 is provided with a loop groove 35. Loop groove 35 has such a groove shape that is recessed inward in a radial direction of pivoting center axis 102 and that loops with respect to pivoting center axis 102.

Cutting tool rest 31 further has an air supply portion 41. Air supply portion 41 is provided at a cross sectional position of cutting tool rest 31 at tool change position J shown in Fig. 4. Air supply portion 41 is provided with a first air flow path 43. Air is supplied from an air supply source 46 to first air flow path 43.

Ring member 34 is further provided with a nozzle insertion hole 44. Nozzle insertion hole 44 is a hole that has a bottom and that is recessed inward from a groove bottom of loop groove 35 in the radial direction of pivoting center axis 102. Air supply portion 41 has an air nozzle 42. Air nozzle 42 is provided with a through hole 43h. Through hole 43h forms an air discharge port from first air flow path 43.

Cutting tool rest 31 further has a motor 36. Motor 36 is provided at a cross sectional position of cutting tool rest 31 at workpiece processing position K shown in Fig. 5. Motor 36 is included in turret 33.

Motor 36 includes a rotor shaft 37. Rotor shaft 37 extends axially along a center axis 106 extending in the radial direction of pivoting center axis 102. Rotor shaft 37 is supported to be rotatable with respect to center axis 106. An engagement groove 38 is formed at a tip portion of rotor shaft 37. Engagement groove 38 has a groove shape that is recessed from an end surface of the tip portion of rotor shaft 37 and that extends in one direction. Engagement groove 38 is provided to be contiguous to loop groove 35 in the peripheral direction of pivoting center axis 102.

It should be noted that as described in detail later, air supply portion 41 performs air purge at the time of automatic change of a tool attached to cutting tool rest 31. When a rotary tool is attached to cutting tool rest 31, motor 36 outputs a rotation to the rotary tool.

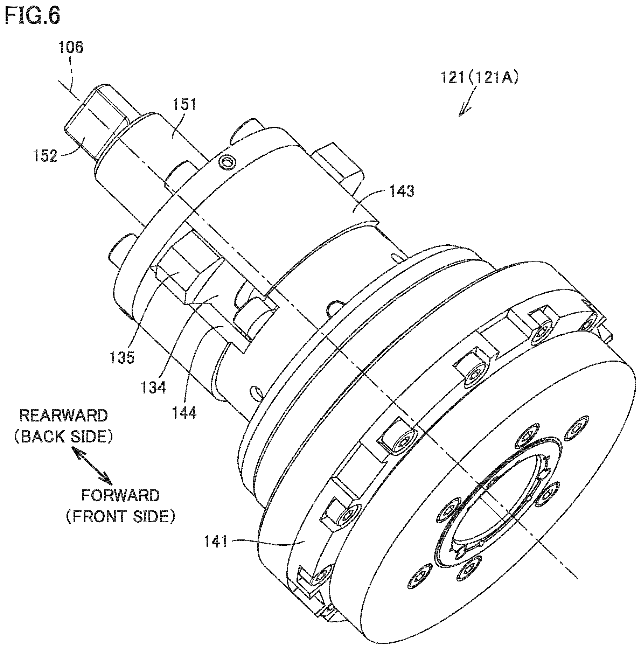

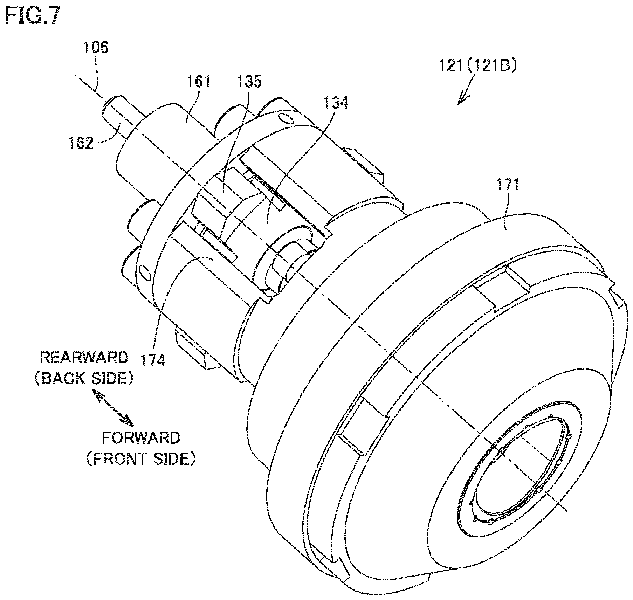

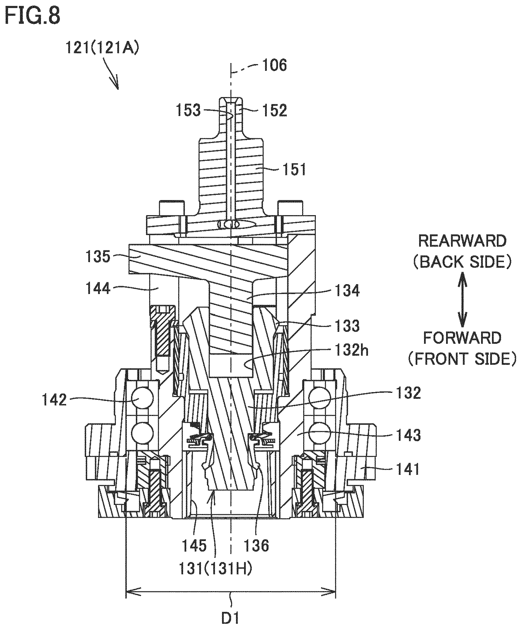

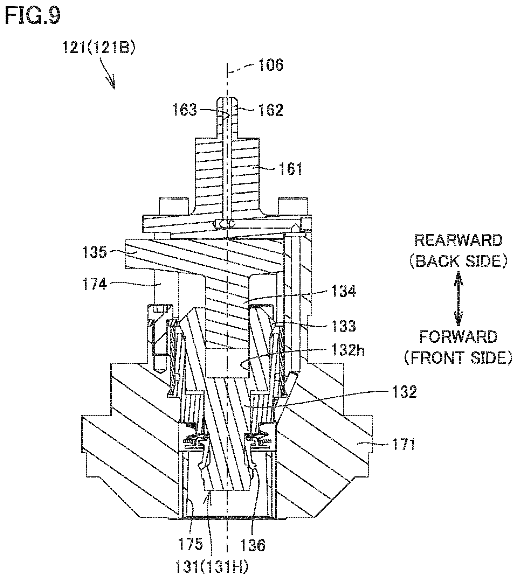

Next, a structure of tool holding portion 210 will be described. Fig. 6 is a perspective view showing a first tool holder for a rotary tool. Fig. 7 is a perspective view showing a second tool holder for a stationary tool. Fig. 8 is a cross sectional view showing the first tool holder in Fig. 6. Fig. 9 is a cross sectional view showing the second tool holder in Fig. 7.

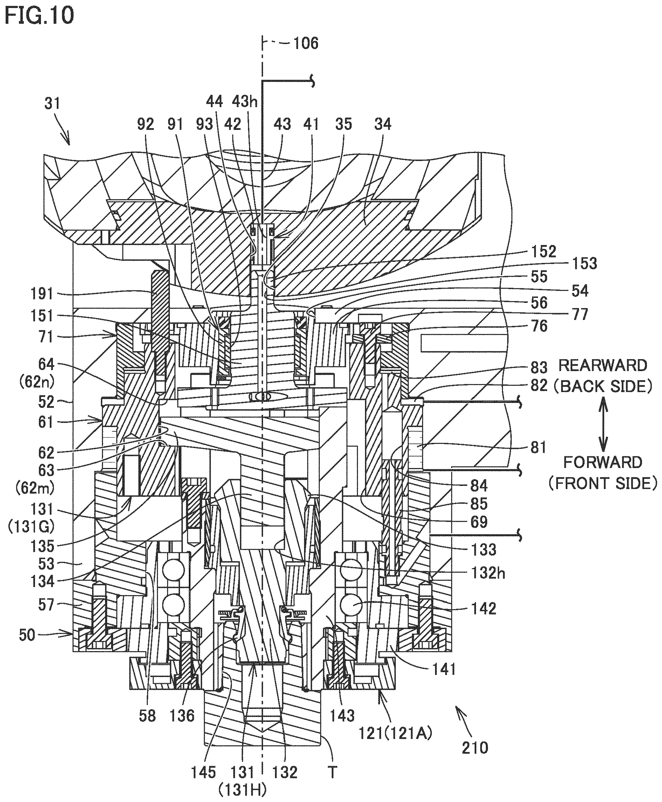

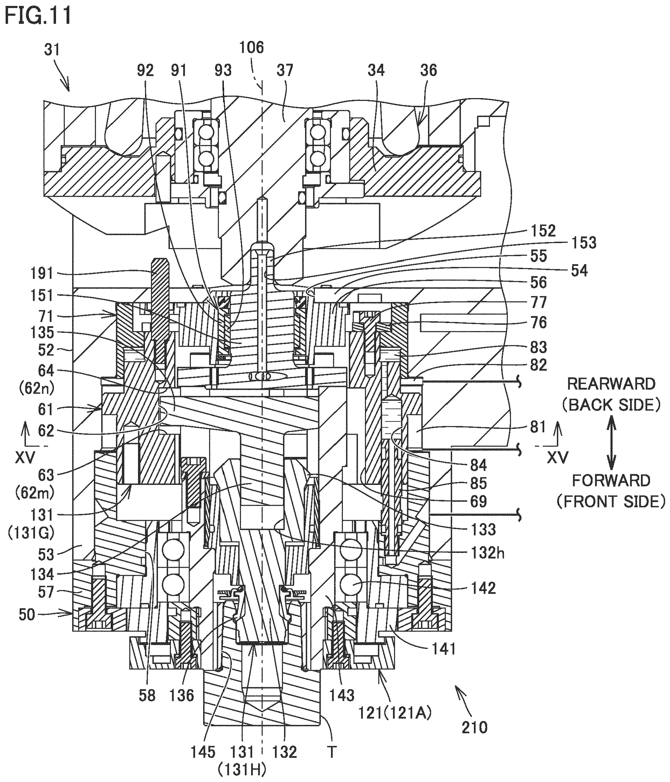

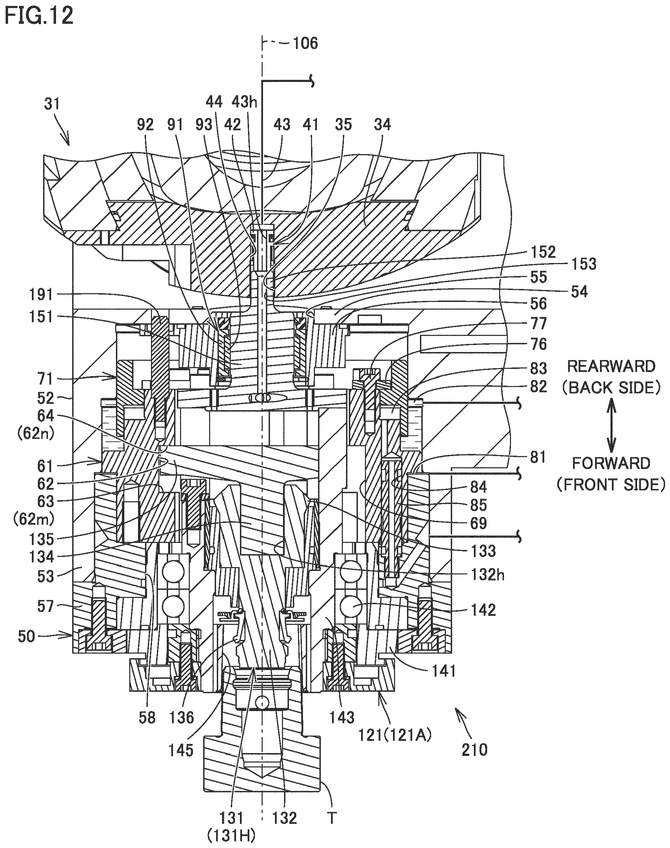

Fig. 10 is a cross sectional view showing the cutting tool rest (at the time of clamping) to which the first tool holder is attached. Fig. 11 is a cross sectional view showing the cutting tool rest (at the time of workpiece processing) to which the first tool holder is attached. Fig. 12 is a cross sectional view showing the cutting tool rest (at the time of unclamping) to which the first tool holder is attached.

Fig. 10 shows a cross section of cutting tool rest 31 at tool change position J in Fig. 2 at the time of clamping of the rotary tool. Fig. 11 shows a cross section of cutting tool rest 31 at workpiece processing position K in Fig. 3 at the time of workpiece processing by the rotary tool. Fig. 12 shows a cross section of cutting tool rest 31 at tool change position J in Fig. 2 at the time of unclamping of the rotary tool.

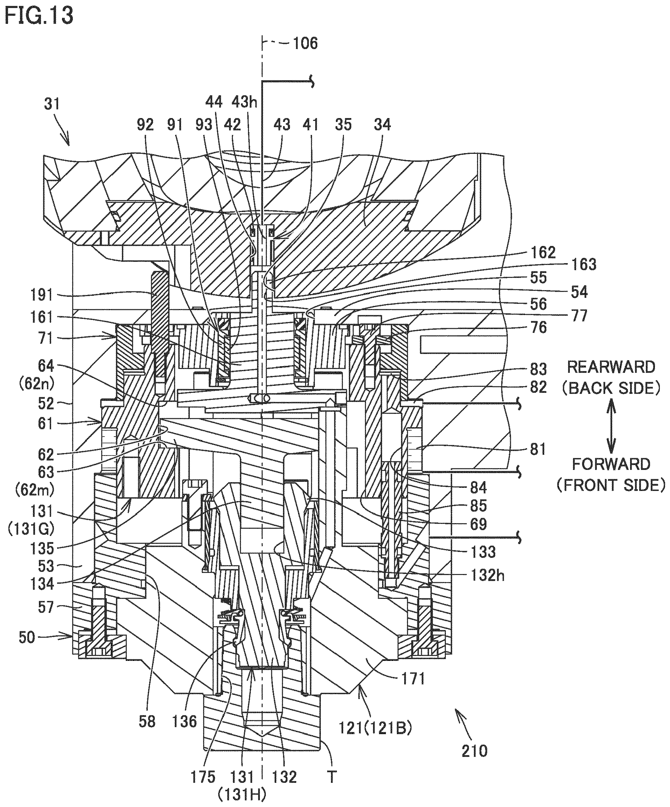

Fig. 13 is a cross sectional view showing the cutting tool rest (at the time of clamping) to which the second tool holder is attached. Fig. 13 representatively shows a cross section of cutting tool rest 31 at tool change position J in Fig. 2 at the time of clamping of the stationary tool.

Referring to Figs. 4 to 13, each tool holding portion 210 has a holder attachment portion 50 and a tool holder 121. Holder attachment portion 50 is provided on the outer peripheral surface of turret 33. Holder attachment portion 50 is provided with a holder insertion hole 58. Holder insertion hole 58 has a recess shape recessed inward in the radial direction of pivoting center axis 102.

Tool holder 121 is inserted into holder insertion hole 58 in a direction indicated by an arrow 201 in Fig. 4, thereby attaching tool holder 121 to holder attachment portion 50. Center axis 106 shown in Figs. 6 to 9 coincides with center axis 106 shown in Figs. 4 and 5 when tool holder 121 is attached to holder attachment portion 50.

In the following description, a backside direction in a direction of insertion of tool holder 121 into holder insertion hole 58 is also referred to as "rearward in the axis direction of center axis 106", and a front-side direction in the direction of insertion of tool holder 121 into holder insertion hole 58 is also referred to as "forward in the axis direction of center axis 106".

Each tool holding portion 210 has a clamping mechanism portion 131. Clamping mechanism portion 131 is operated between a clamping state and an unclamping state when supplied with a hydraulic pressure, the clamping state being a state in which the tool is clamped, the unclamping state being a state in which the tool is unclamped.

Referring to Figs. 6 to 9, each of a first tool holder 121A and a second tool holder 121B is prepared as tool holder 121 that can be attached to holder attachment portion 50.

First tool holder 121A is a tool holder for holding a rotary tool. Second tool holder 121B is a tool holder for holding a stationary tool. In accordance with workpiece processing to be performed in machine tool 10, a user can attach, to each of holder attachment portions 50, first tool holder 121A for holding the rotary tool or second tool holder 121B for holding the stationary tool.

It should be noted that the rotary tool is a tool that processes a workpiece while rotating, such as a drill, an end mill, or a reamer. The stationary tool is a tool that processes a workpiece that is being rotated, such as an outer-diameter cutting bite, an inner-diameter cutting bite, an end-surface cutting bite, or a parting bite.

Clamping mechanism portion 131 has a clamping operation portion 131H. Clamping operation portion 131H is provided in tool holder 121. Clamping operation portion 131H performs a clamping operation to clamp a tool, and performs an unclamping operation to unclamp the tool.

Clamping operation portion 131H has a drawbar 132, a collet 136, and a sliding member 134.

Drawbar 132 is provided on center axis 106. Drawbar 132 is provided to be slidable forward/rearward in the axis direction of center axis 106. Collet 136 is attached to a front end portion of drawbar 132. Collet 136 is deformed to be increased or decreased in diameter with respect to center axis 106 in response to forward/rearward sliding movement of drawbar 132 in the axis direction of center axis 106.

Drawbar 132 is provided with an insertion hole 132h. Insertion hole 132h extends on center axis 106 and opens rearward in the axis direction of center axis 106. Sliding member 134 and drawbar 132 are provided side by side in the axis direction of center axis 106. Sliding member 134 is inserted in insertion hole 132h.

Clamping operation portion 131H further has levers 135 (locking portion). Levers 135 are provided at sliding member 134.

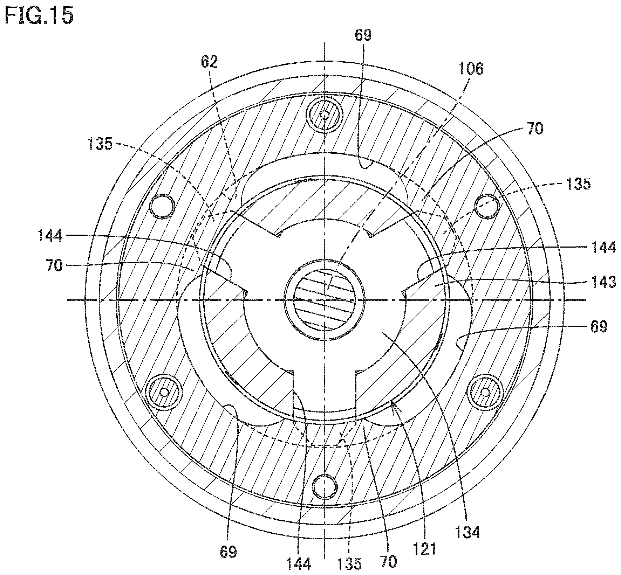

Each of levers 135 has a lever shape that extends outward in the radial direction of center axis 106. Clamping operation portion 131H has the plurality of levers 135. Clamping operation portion 131H has three levers 135. The plurality of levers 135 are arranged at intervals in a peripheral direction of center axis 106. The plurality of levers 135 are provided at equal intervals in the peripheral direction of center axis 106 (see Fig. 15 described later).

When external force oriented rearward in the axis direction of center axis 106 is applied to the plurality of levers 135, sliding member 134 is slid rearward in the axis direction of center axis 106. On this occasion, drawbar 132 is slid rearward in the axis direction of center axis 106 together with sliding member 134, thereby deforming collet 136 to be increased in diameter with respect to center axis 106. A tool is grasped by collet 136 and is drawn rearward in the axis direction of center axis 106, thereby attaining the clamping state of the tool.

When external force oriented forward in the axis direction of center axis 106 is applied to the plurality of levers 135, sliding member 134 is slid forward in the axis direction of center axis 106. On this occasion, drawbar 132 is slid forward in the axis direction of center axis 106 together with sliding member 134, thereby deforming collet 136 to be decreased in diameter with respect to center axis 106. The tool grasped by collet 136 is released and the tool is pushed forward in the axis direction of center axis 106, thereby attaining the unclamping state of the tool.

Drawbar 132 has a wedge mechanism portion 133. When sliding member 134 is slid rearward in the axis direction of center axis 106 at the time of clamping of the tool, force oriented outward in the radial direction of center axis 106 acts on wedge mechanism portion 133 from sliding member 134, thereby causing a wedge effect in wedge mechanism portion 133. Thus, even when the force oriented rearward in the axis direction of center axis 106 and applied to the plurality of levers 135 is released, the clamping state of the tool is maintained.

Referring to Figs. 6 and 8, first tool holder 121A further has an outer housing 141 (second housing member), an inner housing 143, a first bearing 142, and a rear member 151.

Inner housing 143 has a cylindrical shape centered on center axis 106. Clamping operation portion 131H is provided inside inner housing 143. A tool insertion hole 145 is formed in inner housing 143. Tool insertion hole 145 opens forward in the axis direction of center axis 106. In tool insertion hole 145, drawbar 132 and collet 136 at clamping operation portion 131H are disposed. A rotary tool to be clamped by clamping mechanism portion 131 is inserted into tool insertion hole 145.

Inner housing 143 is provided with a plurality of openings 144. Each of openings 144 extends through inner housing 143 in the radial direction of center axis 106. The plurality of openings 144 are provided at respective phase positions corresponding to the plurality of levers 135 with respect to center axis 106. The plurality of levers 135 extend to outside of inner housing 143 through the plurality of openings 144 (see Fig. 15 described later).

Outer housing 141 has a cylindrical shape centered on center axis 106. Outer housing 141 is provided on an outer periphery of inner housing 143. Outer housing 141 is provided at a position close to the front end portion of first tool holder 121A in the axis direction of center axis 106. When attaching first tool holder 121A to cutting tool rest 31, outer housing 141 is fastened to a below-described front housing 57 shown in Figs. 4 and 5.

First bearing 142 is interposed between inner housing 143 and outer housing 141. First bearing 142 is provided at a position close to the front end portion of first tool holder 121A in the axis direction of center axis 106. Clamping operation portion 131H is supported by first bearing 142 with inner housing 143 being interposed therebetween so as to be rotatable with respect to center axis 106. First bearing 142 is an angular ball bearing.

Rear member 151 is provided at a rear end portion of first tool holder 121A. Rear member 151 is fastened to inner housing 143. Rear member 151 is provided to close an opening of inner housing 143 that opens rearward in the axis direction of center axis 106.

Rear member 151 has a first connection portion 152. First connection portion 152 extends on center axis 106 and protrudes rearward in the axis direction of center axis 106. First connection portion 152 has a key shape having a quadrangular cross section when cut along a plane orthogonal to center axis 106.

First connection portion 152 is provided with a second air flow path 153. Second air flow path 153 extends on center axis 106 and opens rearward in the axis direction of center axis 106. Second air flow path 153 extends from first connection portion 152 through inside of rear member 151 and inside of inner housing 143 in this order, and opens at an inner peripheral surface of inner housing 143 that defines tool insertion hole 145.

Referring to Figs. 7 and 9, second tool holder 121B further has a housing 171 and a rear member 161.

Housing 171 has a cylindrical shape centered on center axis 106. Clamping operation portion 131H is provided inside housing 171. Housing 171 is provided with a tool insertion hole 175. Tool insertion hole 175 opens forward in the axis direction of center axis 106. In tool insertion hole 175, drawbar 132 and collet 136 at clamping operation portion 131H are disposed. A stationary tool to be clamped by clamping mechanism portion 131 is inserted into tool insertion hole 175.

Housing 171 is provided with a plurality of openings 174. The plurality of openings 174 are provided in the same manner as the plurality of openings 144 in inner housing 143 of first tool holder 121A.

Rear member 161 is provided at a rear end portion of second tool holder 121B. Rear member 161 is fastened to housing 171. Rear member 161 is provided to close an opening of housing 171 that opens rearward in the axis direction of center axis 106.

Rear member 161 has a second connection portion 162. Second connection portion 162 extends on center axis 106 and protrudes rearward in the axis direction of center axis 106. Second connection portion 162 has a pin shape having a circular cross section when cut along a plane orthogonal to center axis 106.

A third air flow path 163 is provided in second connection portion 162. Third air flow path 163 extends on center axis 106 and opens rearward in the axis direction of center axis 106. Third air flow path 163 extends from second connection portion 162 through inside of rear member 161 and inside of housing 171, and opens at an inner peripheral surface of housing 171 that defines tool insertion hole 175.

Referring to Figs. 6 to 9, first tool holder 121A and second tool holder 121B have substantially the same external appearance. As a whole, each of first tool holder 121A and second tool holder 121B has an external appearance having a diameter that is decreased in a direction from the forward side to the rear side in the axis direction of center axis 106.

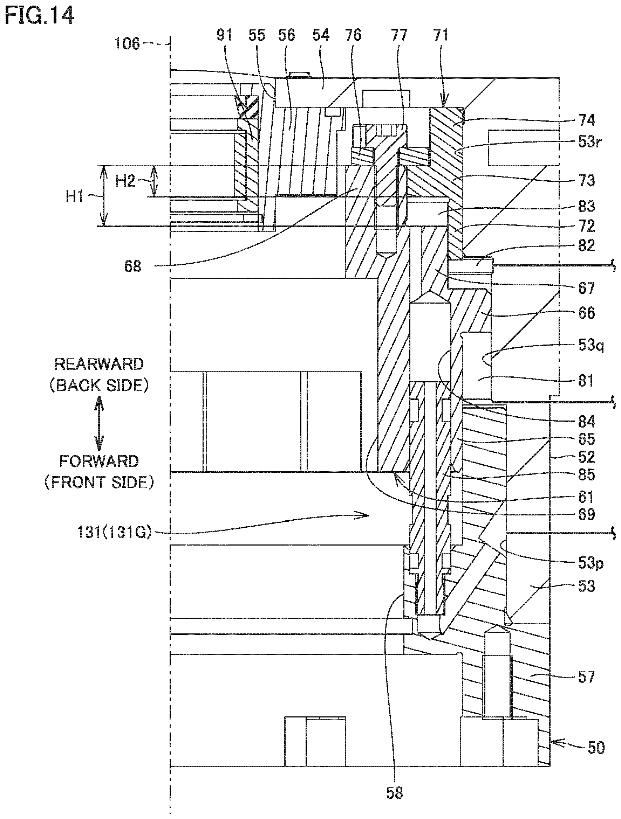

Fig. 14 is an enlarged cross sectional view showing the holder attachment portion in a range surrounded by a chain double-dashed line XIV in Fig. 4.

Referring to Figs. 4 and 14, clamping mechanism portion 131 further has a hydraulic cylinder mechanism portion 131G. Hydraulic cylinder mechanism portion 131G is provided at holder attachment portion 50. Hydraulic cylinder mechanism portion 131G forms a hydraulic cylinder for operating clamping operation portion 131H. Hydraulic cylinder mechanism portion 131G has a cylinder 52 and front housing 57 (first housing member). Holder attachment portion 50 further has a bearing housing 56.

Cylinder 52 has a cylindrical portion 53 and a rear wall portion 54. Cylindrical portion 53 has a cylindrical shape centered on center axis 106.

Cylindrical portion 53 has a first inner peripheral surface 53p, a second inner peripheral surface 53q, and a third inner peripheral surface 53r. First inner peripheral surface 53p, second inner peripheral surface 53q, and third inner peripheral surface 53r are arranged side by side in this order from the forward side to the rear side in the axis direction of center axis 106. Second inner peripheral surface 53q has an inner diameter larger than that of third inner peripheral surface 53r. First inner peripheral surface 53p has an inner diameter larger than that of second inner peripheral surface 53q.

Rear wall portion 54 has a wall shape to close the opening of cylindrical portion 53 on the rear side in the axis direction of center axis 106. Rear wall portion 54 is provided with a communication hole 55. Communication hole 55 is constituted of a through hole extending through rear wall portion 54 in the axis direction of center axis 106. Communication hole 55 is provided to communicate inside and outside of cylindrical portion 53.

Front housing 57 is connected to the front end portion (cylindrical portion 53) of cylinder 52. Front housing 57 is fitted inside first inner peripheral surface 53p. Bearing housing 56 is connected to the rear end portion (rear wall portion 54) of cylinder 52. Bearing housing 56 is fitted into communication hole 55 from the inside of cylindrical portion 53.

Holder attachment portion 50 is provided with a holder insertion hole 58. Holder insertion hole 58 extends on center axis 106 and opens forward in the axis direction of center axis 106. Holder insertion hole 58 is provided in front housing 57. Tool holder 121 (first tool holder 121A, second tool holder 121B) to be attached to holder attachment portion 50 is inserted into holder insertion hole 58. A direction indicated by an arrow 201 in Fig. 4 is an direction of insertion of tool holder 121 (first tool holder 121A, second tool holder 121B) into holder insertion hole 58.

Holder attachment portion 50 further has a second bearing 91. Second bearing 91 is provided at a rear end portion of holder attachment portion 50. Second bearing 91 is fitted inside bearing housing 56. Second bearing 91 is disposed inside cylindrical portion 53.

Referring to Figs. 10 to 12, first tool holder 121A for holding a rotary tool is attached to holder attachment portion 50. Outer housing 141 of first tool holder 121A is fitted inside front housing 57 of holder attachment portion 50.

Rear member 151 is inserted inside second bearing 91. Second bearing 91 is disposed on the back side with respect to first bearing 142 in the direction of insertion of first tool holder 121A into holder insertion hole 58. Second bearing 91 is provided to face turret 33 in the axis direction of center axis 106. A diameter D2 of second bearing 91 centered on center axis 106 is smaller than a diameter D1 of first bearing 142 centered on center axis 106 (see Figs. 4 and 8).

Second bearing 91 is a needle bearing. Second bearing 91 has an outer ring 92 and a plurality of rollers 93.

Outer ring 92 has a cylindrical shape centered on center axis 106. Outer ring 92 is fitted inside bearing housing 56. The plurality of rollers 93 are supported by outer ring 92. Each of rollers 93 extends axially in the axis direction of center axis 106. The plurality of rollers 93 are arranged at intervals in the peripheral direction of center axis 106. The plurality of rollers 93 are in contact with first tool holder 121A. The plurality of rollers 93 are in contact with the outer peripheral surface of rear member 151.

Second bearing 91 supports first tool holder 121A so as to be rotatable with respect to center axis 106. First tool holder 121A is rotatably supported by first bearing 142 on the front side in the direction of insertion of first tool holder 121A into holder insertion hole 58, and is rotatably supported by second bearing 91 on the back side in the direction of insertion of first tool holder 121A.

First connection portion 152 is moved inside loop groove 35 in response to a pivoting operation of turret 33. In the cross section of cutting tool rest 31 at tool change position J shown in Figs. 10 and 12, first connection portion 152 is connected to air supply portion 41. First connection portion 152 is positioned to face air nozzle 42 in nozzle insertion hole 44. Thus, first air flow path 43 on the turret 33 side communicates with second air flow path 153 on the first tool holder 121A side.

When automatically changing the rotary tool held by first tool holder 121A, air from air supply source 46 flows through first air flow path 43 and second air flow path 153 in this order. The air flowing through second air flow path 153 is jetted to a gap between the rotary tool to be inserted into and removed from tool insertion hole 145 and the inner peripheral surface of inner housing 143 that defines tool insertion hole 145.

In the cross section of cutting tool rest 31 at workpiece processing position K shown in Fig. 11, first connection portion 152 is disposed in engagement groove 38 of rotor shaft 37. On this occasion, first connection portion 152 is engaged with engagement groove 38 because first connection portion 152 has a quadrangular cross section. Thus, rotation output from motor 36 can be transmitted from rotor shaft 37 to rear member 151, thereby rotating the rotary tool held by first tool holder 121A.

Referring to Fig. 13, second tool holder 121B for holding a stationary tool is attached to holder attachment portion 50. Housing 171 of second tool holder 121B is fitted inside front housing 57 of holder attachment portion 50.

Rear member 161 is inserted inside second bearing 91. Second tool holder 121B is supported by front housing 57 on the front side in the direction of insertion of second tool holder 121B into holder insertion hole 58, and is supported by second bearing 91 on the back side in the direction of insertion of second tool holder 121B.

Second connection portion 162 is moved inside loop groove 35 in response to a pivoting operation of turret 33. In the cross section of cutting tool rest 31 at tool change position J shown in Fig. 13, second connection portion 162 is positioned to face air nozzle 42 in nozzle insertion hole 44. Thus, first air flow path 43 on the turret 33 side communicates with third air flow path 163 on the second tool holder 121B side.

When automatically changing the stationary tool held by second tool holder 121B, air from air supply source 46 flows through first air flow path 43 and third air flow path 163 in this order. The air flowing through third air flow path 163 is jetted to a gap between the stationary tool to be inserted into and removed from tool insertion hole 175 and the inner peripheral surface of housing 171 that defines tool insertion hole 175.

When second tool holder 121B is positioned at workpiece processing position K, second connection portion 162 is disposed in engagement groove 38 of rotor shaft 37 in the same manner as when first tool holder 121A is positioned at workpiece processing position K. On this occasion, second connection portion 162 is not engaged with engagement groove 38 because second connection portion 162 has a circular cross section. Thus, even if rotation is output from motor 36, the rotation is not transmitted to second tool holder 121B.

Referring to Figs. 4 and 14, hydraulic cylinder mechanism portion 131G further has a first piston 61 and a second piston 71.

Each of first piston 61 and second piston 71 has a cylindrical shape centered on center axis 106. First piston 61 and second piston 71 are fitted to cylinder 52. First piston 61 and second piston 71 are provided to be slidable in the axis direction of center axis 106 (third axis).

First piston 61 and second piston 71 are provided side by side in the axis direction of center axis 106. Second piston 71 is disposed on the back side with respect to first piston 61 in the direction of insertion of tool holder 121 into holder insertion hole 58.

First piston 61 has a front stage portion 65, a first intermediate stage portion 66, a second intermediate stage portion 67, and a rear stage portion 68.

Front stage portion 65, first intermediate stage portion 66, second intermediate stage portion 67, and rear stage portion 68 are arranged side by side in this order in the direction from the front side to the back side in the direction of insertion of tool holder 121 into holder insertion hole 58. Front stage portion 65 is provided at the front end portion of first piston 61. Rear stage portion 68 is provided at the rear end portion of first piston 61.

Front stage portion 65, first intermediate stage portion 66, second intermediate stage portion 67, and rear stage portion 68 form a stepped shape at the outer peripheral surface of first piston 61. First intermediate stage portion 66 has the largest outer diameter (diameter) in first piston 61. Front stage portion 65 and second intermediate stage portion 67 have smaller outer diameters (diameters) than that of first intermediate stage portion 66. Rear stage portion 68 has a smaller outer diameter (diameter) than those of front stage portion 65 and second intermediate stage portion 67. Rear stage portion 68 has the smallest outer diameter (diameter) in first piston 61.

The outer peripheral surface of first intermediate stage portion 66 is in sliding contact with second inner peripheral surface 53q of cylinder 52. The outer peripheral surface of front stage portion 65 is in sliding contact with the inner peripheral surface of front housing 57.

Second piston 71 has a front stage portion 72, an intermediate stage portion 73, and a rear stage portion 74. Front stage portion 72, intermediate stage portion 73, and rear stage portion 74 are arranged side by side in this order in the direction from the front side to the back side in the direction of insertion of tool holder 121 into holder insertion hole 58. Front stage portion 72 is provided at the front end portion of second piston 71. Rear stage portion 74 is provided at the rear end portion of second piston 71.

Front stage portion 72, intermediate stage portion 73, and rear stage portion 74 form a stepped shape at the inner peripheral surface of second piston 71. Intermediate stage portion 73 has the smallest inner diameter in second piston 71. Rear stage portion 74 has a larger inner diameter than that of intermediate stage portion 73. Front stage portion 72 has a larger inner diameter than that of rear stage portion 74. Front stage portion 72 has the largest inner diameter in second piston 71. Intermediate stage portion 73 has a protruding shape protruding inward from rear stage portion 74 and front stage portion 72 in the radial direction of center axis 106.

The outer peripheral surface of second piston 71 (front stage portion 72, intermediate stage portion 73, and rear stage portion 74) is in sliding contact with third inner peripheral surface 53r of cylinder 52. The inner peripheral surface of front stage portion 72 is in sliding contact with the outer peripheral surface of second intermediate stage portion 67 in first piston 61. The inner peripheral surface of intermediate stage portion 73 is in sliding contact with the outer peripheral surface of rear stage portion 68 in first piston 61.

Hydraulic cylinder mechanism portion 131G further has a locking block 76 (locking member). Locking block 76 is provided at first piston 61. Locking block 76 is provided at the rear end portion (rear stage portion 68) of first piston 61. Locking block 76 is fastened to first piston 61 by a bolt 77. Locking block 76 is provided to protrude outward with respect to the outer peripheral surface of rear stage portion 68 in the radial direction of center axis 106. A portion of locking block 76 protruding outward in the radial direction of center axis 106 faces second intermediate stage portion 67 of first piston 61 with a space being interposed therebetween in the axis direction of center axis 106.

Intermediate stage portion 73 of second piston 71 is disposed between the portion of locking block 76 protruding outward in the radial direction of center axis 106 and second intermediate stage portion 67 of first piston 61, in the axis direction of center axis 106.

A distance H1 between locking block 76 and second intermediate stage portion 67 in the axis direction of center axis 106 is larger than a length H2 of intermediate stage portion 73 in the axis direction of center axis 106. With such a configuration, second piston 71 can be slid with respect to first piston 61 in a range in which intermediate stage portion 73 is moved between locking block 76 and second intermediate stage portion 67. Locking block 76 is provided to avoid first piston 61 and second piston 71 from being displaced from each other.

Cylinder 52 defines and forms a first hydraulic pressure chamber 81 and a second hydraulic pressure chamber 82. First piston 61 and second piston 71 define and form a third hydraulic pressure chamber 83.

Each of first hydraulic pressure chamber 81, second hydraulic pressure chamber 82, and third hydraulic pressure chamber 83 is connected to a hydraulic pressure supply source 87 via a valve 220. By operating valve 220, a hydraulic pressure from hydraulic pressure supply source 87 is supplied to first hydraulic pressure chamber 81, second hydraulic pressure chamber 82, or third hydraulic pressure chamber 83 (see Figs. 4 and 5).

First hydraulic pressure chamber 81 is formed between first piston 61 (front stage portion 65) and cylinder 52 (second inner peripheral surface 53q) in the radial direction of center axis 106. First hydraulic pressure chamber 81 is formed between front housing 57 and first piston 61 (first intermediate stage portion 66) in the axis direction of center axis 106. When the hydraulic pressure is supplied to first hydraulic pressure chamber 81, first piston 61 is slid from the front side to the back side in the direction of insertion of tool holder 121 into holder insertion hole 58.

Second hydraulic pressure chamber 82 is formed between first piston 61 (second intermediate stage portion 67) and cylinder 52 (second inner peripheral surface 53q) in the radial direction of center axis 106. Second hydraulic pressure chamber 82 is formed between first piston 61 (first intermediate stage portion 66) and each of cylinder 52 (stepped portion between second inner peripheral surface 53q and third inner peripheral surface 53r) and second piston 71 (front stage portion 72) in the axis direction of center axis 106. First hydraulic pressure chamber 81 and second hydraulic pressure chamber 82 are arranged side by side with first intermediate stage portion 66 being interposed therebetween in the axis direction of center axis 106. When the hydraulic pressure is supplied to second hydraulic pressure chamber 82, first piston 61 is slid from the back side to the front side in the direction of insertion of tool holder 121 into holder insertion hole 58.

Third hydraulic pressure chamber 83 is formed between first piston 61 (rear stage portion 68) and second piston 71 (front stage portion 72) in the radial direction of center axis 106. Third hydraulic pressure chamber 83 is formed between first piston 61 (second intermediate stage portion 67) and second piston 71 (intermediate stage portion 73) in the axis direction of center axis 106.

First piston 61 is provided with a plunger insertion hole 84. Plunger insertion hole 84 extends from the end surface of the front end portion (front stage portion 65) of first piston 61 in the axis direction of center axis 106, and communicates with third hydraulic pressure chamber 83.

Hydraulic cylinder mechanism portion 131G further has a plunger 85. Plunger 85 extends cylindrically in the axis direction of center axis 106. Plunger 85 is inserted in plunger insertion hole 84. Plunger 85 can be slid in plunger insertion hole 84 in the axis direction of center axis 106. Plunger 85 protrudes from plunger insertion hole 84 to the front side in the direction of insertion of tool holder 121 into holder insertion hole 58. Plunger 85 is connected to front housing 57.

The hydraulic pressure from hydraulic pressure supply source 87 is supplied to third hydraulic pressure chamber 83 through plunger 85 and plunger insertion hole 84. When the hydraulic pressure is supplied to third hydraulic pressure chamber 83, first piston 61 and second piston 71 are slid relative to each other in a direction in which second intermediate stage portion 67 and intermediate stage portion 73 are separated from each other.

First hydraulic pressure chamber 81, second hydraulic pressure chamber 82, and third hydraulic pressure chamber 83 are arranged in this order in the direction from the front side to the back side in the direction of insertion of tool holder 121 into holder insertion hole 58.

Third hydraulic pressure chamber 83 is provided inward with respect to first hydraulic pressure chamber 81 and second hydraulic pressure chamber 82 in the radial direction of center axis 106. The outer peripheral wall of third hydraulic pressure chamber 83 is located at the same radial position with respect to center axis 106 as that of the inner peripheral wall of second hydraulic pressure chamber 82. The outer peripheral wall of third hydraulic pressure chamber 83 is located at a position located inward with respect to the inner peripheral wall of first hydraulic pressure chamber 81 in the radial direction of center axis 106.

Fig. 15 is a cross sectional view showing the cutting tool rest when viewed in a direction of arrow on a line XV-XV in Fig. 11. Referring to Figs. 11 and 15, hydraulic cylinder mechanism portion 131G further has a first facing portion 63 and a second facing portion 64. First facing portion 63 and second facing portion 64 are provided at first piston 61.

First facing portion 63 and second facing portion 64 are provided to face each other with a space being interposed therebetween in the axis direction of center axis 106. First facing portion 63 is located on the front side with respect to second facing portion 64 in the direction of insertion of first tool holder 121A into holder insertion hole 58.

First piston 61 is provided with a recess 62. Recess 62 has a recess shape depressed outward from the inner peripheral surface of first piston 61 in the radial direction of center axis 106. Recess 62 is an annular groove extending in the peripheral direction of center axis 106.

First piston 61 has a first wall surface 62m and a second wall surface 62n. Each of first wall surface 62m and second wall surface 62n correspond to a wall surface of recess 62. Each of first wall surface 62m and second wall surface 62n is constituted of a flat surface orthogonal to center axis 106. First wall surface 62m is oriented toward the back side in the direction of insertion of first tool holder 121A into holder insertion hole 58. Second wall surface 62n is oriented toward the front side in the direction of insertion of first tool holder 121A into holder insertion hole 58. First wall surface 62m corresponds to first facing portion 63. Second wall surface 62n corresponds to second facing portion 64.

The plurality of levers 135 are disposed between first facing portion 63 (first wall surface 62m) and second facing portion 64 (second wall surface 62n). A distance between first facing portion 63 (first wall surface 62m) and second facing portion 64 (second wall surface 62n) in the axis direction of center axis 106 is larger than the length (thickness) of each lever 135 in the axis direction of center axis 106.

Referring to Figs. 10 to 12 and 14, first piston 61 is reciprocally moved between a first piston position (position shown in Fig. 10) and a second piston position (position shown in Fig. 12), the first piston position being a position at which levers 135 and first facing portion 63 (first wall surface 62m) are in contact with each other to bring clamping mechanism portion 131 into the clamping state in which the rotary tool is clamped, the second piston position being a position at which levers 135 and second facing portion 64 (second wall surface 62n) are in contact with each other to bring clamping mechanism portion 131 into the unclamping state in which the rotary tool is unclamped.

Second piston 71 moves first piston 61 to a third piston position (position shown in Fig. 11) located between the first piston position (position shown in Fig. 10) and the second piston position (position shown in Fig. 12) in the axis direction of center axis 106. When first piston 61 is positioned at the third piston position (position shown in Fig. 11), clamping mechanism portion 131 is maintained in the clamping state, and levers 135 are separated from first facing portion 63 (first wall surface 62m) and second facing portion 64 (second wall surface 62n).

More specifically, when attaching the rotary tool to first tool holder 121A, clamping mechanism portion 131 is operated from the unclamping state to the clamping state. In this case, as shown in Fig. 10, the supply of the hydraulic pressure from hydraulic pressure supply source 87 to second hydraulic pressure chamber 82 is stopped, and the hydraulic pressure is supplied from hydraulic pressure supply source 87 to first hydraulic pressure chamber 81. When the hydraulic pressure is supplied to first hydraulic pressure chamber 81, first piston 61 is slid rearward in the axis direction of center axis 106.

Thus, first piston 61 is moved to a sliding end which is located on the rear side in the axis direction of center axis 106 and at which bolt 77 is in abutment with rear wall portion 54 of cylinder 52. Also, second piston 71 is moved together with first piston 61 to the sliding end which is located on the rear side in the axis direction of center axis 106 and at which rear stage portion 74 is in abutment with rear wall portion 54 of cylinder 52. Locking block 76 and intermediate stage portion 73 of second piston 71 are separated from each other in the axis direction of center axis 106.

In response to the sliding of first piston 61, first facing portion 63 (first wall surface 62m) comes into contact with the plurality of levers 135. First facing portion 63 (first wall surface 62m) pushes the plurality of levers 135 rearward in the axis direction of center axis 106, with the result that external force oriented rearward in the axis direction of center axis 106 is applied to the plurality of levers 135. Thus, the clamping state is attained in which clamping mechanism portion 131 clamps the rotary tool.

After the clamping state in which the rotary tool is clamped is attained, the supply of the hydraulic pressure from hydraulic pressure supply source 87 to first hydraulic pressure chamber 81 is stopped, and the hydraulic pressure is supplied from hydraulic pressure supply source 87 to third hydraulic pressure chamber 83 as shown in Fig. 11. When the hydraulic pressure is supplied to third hydraulic pressure chamber 83, first piston 61 is slid forward in the axis direction of center axis 106.

Thus, first piston 61 is moved to a position at which locking block 76 is in abutment with intermediate stage portion 73 of second piston 71. Second piston 71 is stopped at a sliding end which is located on the rear side in the axis direction of center axis 106 and at which rear stage portion 74 is in abutment with rear wall portion 54 of cylinder 52.

In response to the sliding of first piston 61, first facing portion 63 (first wall surface 62m) is separated from levers 135. Levers 135 become out of contact with first facing portion 63 (first wall surface 62m) and second facing portion 64 (second wall surface 62n). That is, a length of movement of first piston 61 in this process is smaller than a length of a gap between each lever 135 and second facing portion 64 (second wall surface 62n) in the axis direction of center axis 106 as shown in Fig. 10.

Clamping mechanism portion 131 maintains the clamping state of the rotary tool by the above-described wedge effect in wedge mechanism portion 133. The rotary tool held by first tool holder 121A is rotated to perform milling onto a workpiece. On this occasion, the rotary tool can be rotated without bringing the plurality of levers 135 into contact with first facing portion 63 (first wall surface 62m) and second facing portion 64 (second wall surface 62n).

When detaching the rotary tool from first tool holder 121A, clamping mechanism portion 131 is operated to the unclamping state. In this case, as shown in Fig. 12, the supply of the hydraulic pressure from hydraulic pressure supply source 87 to third hydraulic pressure chamber 83 is stopped, and the hydraulic pressure is supplied to second hydraulic pressure chamber 82. When the hydraulic pressure is supplied to second hydraulic pressure chamber 82, first piston 61 is slid forward in the axis direction of center axis 106.

Thus, first piston 61 is moved to a sliding end which is located on the forward side in the axis direction of center axis 106 and at which front stage portion 65 is in abutment with outer housing 141 and front housing 57. When second piston 71 (intermediate stage portion 73) is locked by locking block 76, second piston 71 is also moved together with first piston 61.

In response to the sliding of first piston 61, second facing portion 64 (second wall surface 62n) comes into contact with the plurality of levers 135. Second facing portion 64 (second wall surface 62n) pushes levers 135 forward in the axis direction of center axis 106, with the result that external force oriented forward in the axis direction of center axis 106 is applied to the plurality of levers 135. Thus, the unclamping state is attained in which clamping mechanism portion 131 unclamps the rotary tool.

It should be noted that the operation of clamping mechanism portion 131 when first tool holder 121A is attached to holder attachment portion 50 has been described above; however, the same applies to the operation of clamping mechanism portion 131 when second tool holder 121B is attached to holder attachment portion 50.

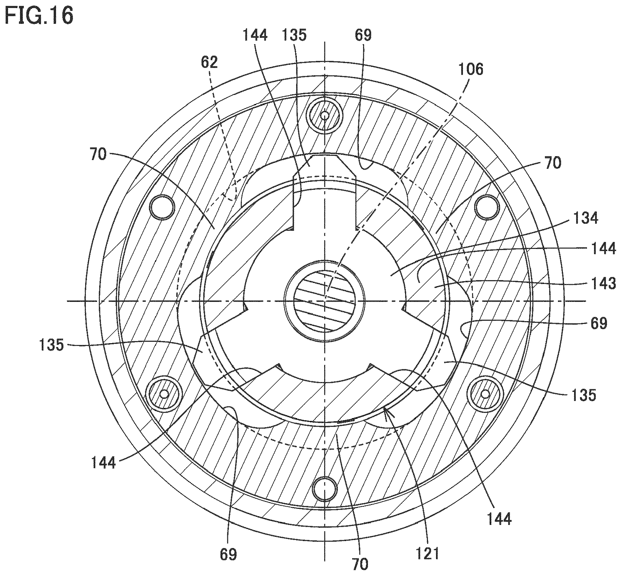

Fig. 16 is a cross sectional view showing steps of attaching and detaching the first tool holder to and from the holder attachment portion in the cutting tool rest shown in Fig. 15.

Referring to Figs. 12, 15 and 16, first piston 61 is further provided with a plurality of notches 69. Each of notches 69 extends from recess 62 in the axis direction of center axis 106 and opens. Notch 69 opens forward in the axis direction of center axis 106. Notch 69 is contiguous to the bottom wall of recess 62 on the rear side in the axis direction of center axis 106.

The plurality of notches 69 are arranged at intervals in the peripheral direction of center axis 106. The plurality of notches 69 are arranged at pitches equal to those of the plurality of levers 135 in the peripheral direction of center axis 106. A wall portion 70 having first facing portion 63 (first wall surface 62m) is provided between adjacent notches 69 in the peripheral direction of center axis 106.

When detaching first tool holder 121A from holder attachment portion 50, first, holder attachment portion 50 and first tool holder 121A are unfastened. Next, the supply of hydraulic pressure from hydraulic pressure supply source 87 is turned off. Next, in order to allow for rotation of first tool holder 121A in the peripheral direction of center axis 106, first tool holder 121A is drawn by a predetermined stroke to the front side in the axis direction of center axis 106.

Next, first tool holder 121A is rotated by 60° with respect to center axis 106. Thus, lever 135 is moved from the position facing wall portion 70 to the position facing notch 69 in the axis direction of center axis 106. Next, first tool holder 121A is drawn to the front side in the axis direction of center axis 106, thereby completing the detachment of first tool holder 121A.

When attaching first tool holder 121A to holder attachment portion 50, the above-described steps should be performed in the reverse order. Attachment and detachment of second tool holder 121B to and from holder attachment portion 50 are performed in the same manner as the attachment and detachment of first tool holder 121A to and from holder attachment portion 50.

In the present embodiment, it has been described that levers 135 serving as the locking portion are provided at clamping operation portion 131H located on the tool holder 121 side and first facing portion 63 and second facing portion 64 are provided at first piston 61 located on the holder attachment portion 50 side; however, the locking portion may be provided at the first piston located on the holder attachment portion side and the first facing portion and the second facing portion may be provided at the clamping operation portion located on the tool holder side.

Further, in the present embodiment, it has been described that tool holding portion 210 holds the tool in such a posture that it extends outward in the radial direction of pivoting center axis 102 of cutting tool rest 31; however, the configuration is not limited thereto and tool holding portion 210 may hold the tool in such a posture that it extends in the axis direction of pivoting center axis 102 of cutting tool rest 31.

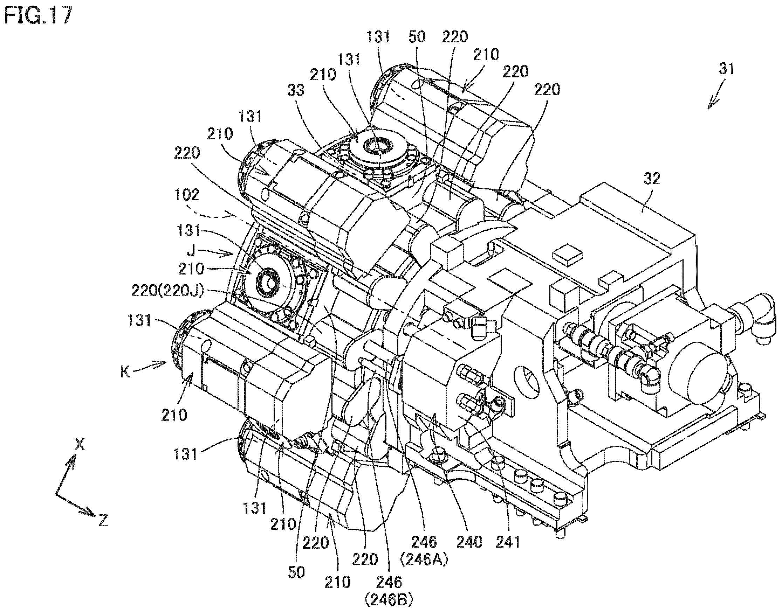

Next, a hydraulic pressure supply mechanism for clamping mechanism portion 131 will be described. Fig. 17 is a rear view showing the cutting tool rest shown in Fig. 1.

In Fig. 17, an inner structure of cutting tool rest base 32 is shown by removing the cover body from cutting tool rest base 32 in Fig. 1. Further, in turret 33, tool holding portions 210 that each hold the tool in such a posture that it extends outward in the radial direction of pivoting center axis 102 and tool holding portions 210 that each hold the tool in such a posture that it extends in the axis direction of pivoting center axis 102 are alternately arranged in the peripheral direction of pivoting center axis 102.

Referring to Fig. 17, each of tool holding portions 210 further has valve 220. Valve 220 controls the hydraulic pressure to be supplied to clamping mechanism portion 131. Valve 220 controls the hydraulic pressure to be supplied to hydraulic cylinder mechanism portion 131G in holder attachment portion 50.

Valve 220 is provided at turret 33. As shown in Figs. 1 and 17, valve 220 is provided on the rear surface side of turret 33 when viewed from the headstock 21 side in the axis direction of pivoting center axis 102. Valve 220 is provided between holder attachment portion 50 and cutting tool rest base 32 in the axis direction of pivoting center axis 102.

The plurality of valves 220 are provided to respectively correspond to the plurality of tool holding portions 210. In the present embodiment, twelve tool holding portions 210 are provided at turret 33, and twelve valves 220 are respectively provided to correspond to twelve tool holding portions 210.

The plurality of valves 220 are provided side by side in the peripheral direction of pivoting center axis 102. The plurality of valves 220 are arranged at equal intervals in the peripheral direction of pivoting center axis 102. The plurality of valves 220 are moved with respect to pivoting center axis 102 together with the plurality of tool holding portions 210 in response to a pivoting operation of turret 33.

Cutting tool rest 31 further has an actuator 240. Actuator 240 is connected to tool holding portion 210 positioned at tool change position J so as to operate valve 220 (hereinafter, also referred to as "valve 220J") of tool holding portion 210 positioned at tool change position J.

One actuator 240 is provided to correspond to the plurality of valves 220. Actuator 240 is attached to cutting tool rest base 32. Regardless of the pivoting operation of turret 33, the position of actuator 240 in the peripheral direction of pivoting center axis 102 is fixed. Actuator 240 is provided at a position corresponding to tool change position J in the peripheral direction of pivoting center axis 102. Actuator 240 is provided at a position facing valve 220J in the axis direction of pivoting center axis 102. Valve 220J is disposed between holder attachment portion 50 of tool holding portion 210 positioned at tool change position J and actuator 240 in the axis direction of pivoting center axis 102.

Actuator 240 has a cylinder main body 241 and pistons 246 (246A, 246B), which form a hydraulic cylinder mechanism. Cylinder main body 241 is constituted of a block body composed of a metal. Each of pistons 246 is fitted to cylinder main body 241. Piston 246 extends in the axis direction of pivoting center axis 102. When the hydraulic pressure is supplied to cylinder main body 241, piston 246 is slid along the axis direction of pivoting center axis 102.

Piston 246A and piston 246B extend in parallel with each other with a space being interposed therebetween. Piston 246A and piston 246B are slid independently of each other along the axis direction of pivoting center axis 102.

It should be noted that a type of the actuator for operating the valve in the present invention is not particularly limited, and may be, for example, a pneumatic cylinder mechanism or a motor.

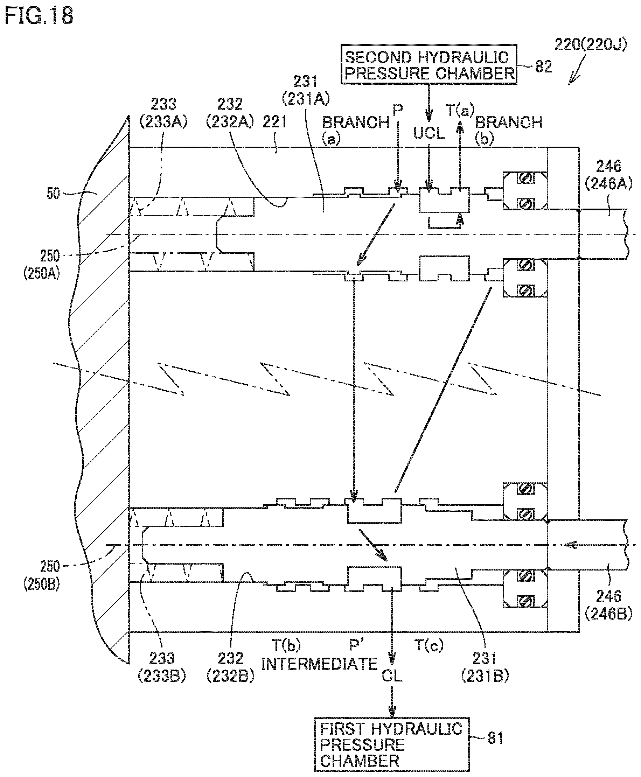

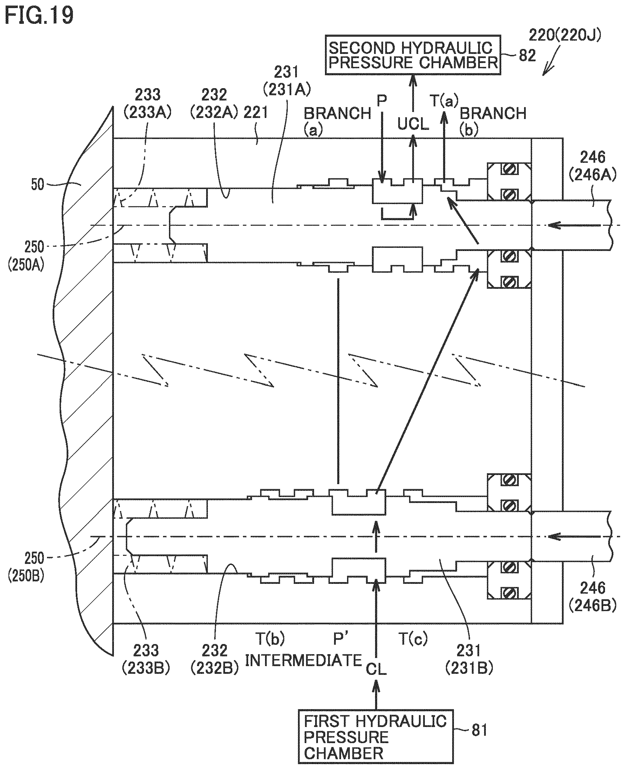

Fig. 18 is a cross sectional view showing the valve (at the time of clamping) in Fig. 17. Fig. 19 is a cross sectional view showing the valve (at the time of unclamping) in Fig. 17. Each of Figs. 18 and 19 shows valve 220 (valve 220J) of tool holding portion 210 positioned at tool change position J.

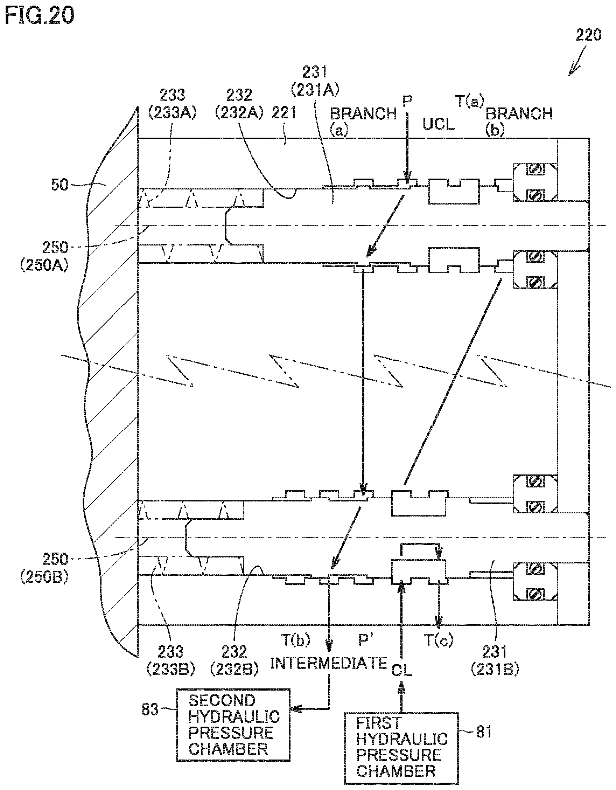

Fig. 20 is a cross sectional view showing a valve (at the time of workpiece processing) in Fig. 17. Fig. 20 shows valve 220 of tool holding portion 210 positioned at workpiece processing position K. It should be noted that valve 220 has a cross sectional shape shown in Fig. 20 at a position except for tool change position J.

Referring to Figs. 18 to 20, valve 220 has a valve main body 221, valve elements 231 (231A, 231B), and biasing members 233 (233A, 233B).

Valve main body 221 is constituted of a block body composed of a metal. Valve main body 221 is connected to holder attachment portion 50. Valve main body 221 is provided with insertion holes 232 (232A, 232B). Each of insertion holes 232 extends with respect to a center axis 250 parallel to pivoting center axis 102.

Valve element 231 is inserted in insertion hole 232. Valve element 231 is constituted of a spool extending with respect to center axis 250 (second axis) parallel to pivoting center axis 102. Valve element 231 is provided to be slidable along the axis direction of center axis 250. Valve element 231 is reciprocally moved in the axis direction of center axis 250 so as to switch a hydraulic circuit for clamping mechanism portion 131.

As shown in Figs. 18 and 19, piston 246 is disposed to face valve 220J of tool holding portion 210 positioned at tool change position J in the axis direction of center axis 250. Piston 246 is in abutment with valve element 231 of valve 220J on center axis 250. Piston 246 can push and advance valve element 231 of valve 220J in one direction along the axis direction of center axis 250 in response to its extension operation.

Biasing member 233 is further inserted in insertion hole 232. Biasing member 233 and valve element 231 are provided side by side in the axis direction of center axis 250. Biasing member 233 is disposed opposite to piston 246 with valve element 231 being interposed therebetween in the axis direction of center axis 250. Biasing member 233 is constituted of a coil spring disposed to be centered on center axis 250. Biasing member 233 is compressed and deformed in the axis direction of center axis 250. Biasing member 233 exerts biasing force on valve element 231 in a direction that is along the axis direction of center axis 250 and that is opposite to the direction of pushing of valve element 231 by piston 246.

Insertion hole 232A and insertion hole 232B extend with respect to center axis 250A and center axis 250B, respectively. Valve element 231A and valve element 231B are inserted in insertion hole 232A and insertion hole 232B, respectively. Valve element 231A and valve element 231B extend with respect to center axis 250A and center axis 250B, respectively. Valve element 231A and valve element 231B extend in parallel with each other with a space being interposed therebetween. As shown in Figs. 18 and 19, in valve 220J of tool holding portion 210 positioned at tool change position J, valve element 231A faces piston 246A on center axis 250A, and valve element 231B faces piston 246B on center axis 250B. Biasing member 233A and biasing member 233B are inserted in insertion hole 232A and insertion hole 232B, respectively.

Valve main body 221 is provided with a branch (a) port, a P port, a UCL port, a T (a) port, a branch (b) port, and a T (b) port, an intermediate port, a P' port, a CL port, and a T (c) port.

The branch (a) port, the P port, the UCL port, the T (a) port, and the branch (b) port are arranged side by side in this order in the axis direction of center axis 250A, and communicate with the outer periphery of valve element 231A. When valve element 231A is reciprocally moved in the axis direction of center axis 250A, adjacent ports of the branch (a) port, the P port, the UCL port, the T (a) port, and the branch (b) port are selectively brought into communication with each other on the outer periphery of valve element 231A.

The T (b) port, the intermediate port, the P' port, the CL port, and the T (c) port are arranged side by side in this order in the axis direction of center axis 250B, and communicate with the outer periphery of valve element 231B. When valve element 231B is reciprocally moved in the axis direction of center axis 250B, adjacent ports of the T (b) port, the intermediate port, the P' port, the CL port, and the T (c) port are selectively brought into communication with each other on the outer periphery of valve element 231B.

The branch (a) port is connected to the P' port inside valve main body 221. Oil (hydraulic oil) is supplied to the P port from hydraulic pressure supply source 87 shown in Figs. 4 and 5. The UCL port is connected to second hydraulic pressure chamber 82 shown in Figs. 4 and 5. The T (a) port is connected to an oil tank (not shown) for collecting the oil. The branch (b) port is connected to the CL port inside valve main body 221.

The T (b) port is connected to an oil tank (not shown) for collecting oil. The intermediate port is connected to third hydraulic pressure chamber 83 shown in Figs. 4 and 5. The CL port is connected to first hydraulic pressure chamber 81 shown in Figs. 4 and 5. The T (c) port is connected to an oil tank (not shown) for collecting oil.

Referring to Figs. 10 and 18, in tool holding portion 210 positioned at tool change position J, piston 246B is extended when operating clamping mechanism portion 131 into the clamping state.

On this occasion, actuator 240 is connected to tool holding portion 210 positioned at tool change position J. Piston 246B pushes and advances valve element 231B against the biasing force of biasing member 233B in one direction along the axis direction of center axis 250B. Valve element 231A receives the biasing force of biasing member 233A and is accordingly positioned at an end portion in the opposite direction along the axis direction of center axis 250A.

The branch (a) port and the P port communicate with each other. The UCL port and the T (a) port communicate with each other. The P' port and the CL port communicate with each other.

The oil supplied to the P port passes through the branch (a) port, the P' port, and the CL port in this order and is then supplied to first hydraulic pressure chamber 81. When the volume of first hydraulic pressure chamber 81 is expanded by the supply of hydraulic pressure, first piston 61 is slid rearward in the axis direction of center axis 106. In response to the sliding of first piston 61, the volume of second hydraulic pressure chamber 82 is decreased. The oil discharged from second hydraulic pressure chamber 82 passes through the UCL port and the T (a) port in this order and is then collected in the oil tank (not shown).

Referring to Figs. 11 and 20, in tool holding portion 210 positioned at tool change position J, after the clamping state of clamping mechanism portion 131 is attained, piston 246B is operated to be contracted. Valve element 231A receives the biasing force of biasing member 233A and is therefore positioned at the end portion in the opposite direction along the axis direction of center axis 250A. Valve element 231B receives the biasing force of biasing member 233B and is therefore positioned at the end portion in the opposite direction along the axis direction of center axis 250B.

The branch (a) port and the P port communicate with each other. The intermediate port and the P' port communicate with each other. The CL port and the T (c) port communicate with each other.

The oil supplied to the P port passes through the branch (a) port, the P' port, and the intermediate port in this order and is then supplied to third hydraulic pressure chamber 83. When the volume of third hydraulic pressure chamber 83 is expanded by the supply of hydraulic pressure, first piston 61 is slid forward in the axis direction of center axis 106. In response to the sliding of first piston 61, the volume of first hydraulic pressure chamber 81 is decreased. The oil discharged from first hydraulic pressure chamber 81 passes through the CL port and the T (c) port in this order and is then collected in the oil tank (not shown).

Valve 220 controls the hydraulic pressure to be supplied to clamping mechanism portion 131 so as to position first piston 61 at the third piston position shown in Fig. 11 in a position included in the plurality of positions at which tool holding portions 210 are positioned and except for tool change position J.

That is, in the present embodiment, when tool holding portion 210 is moved away from tool change position J, valve element 231 of valve 220 receives the biasing force of biasing member 233 and is therefore held at the end portion in the opposite direction along the axis direction of center axis 250. Thus, the hydraulic pressure is continuously supplied to third hydraulic pressure chamber 83, thereby maintaining the state in which first piston 61 is positioned at the third piston position shown in Fig. 11. As a result, in tool holding portion 210 positioned at workpiece processing position K, the rotary tool can be rotated without bringing the plurality of levers 135 into contact with first facing portion 63 and second facing portion 64.

Referring to Figs. 12 and 19, in tool holding portion 210 positioned at tool change position J, when operating clamping mechanism portion 131 into the unclamping state, piston 246A and piston 246B are extended. Piston 246A pushes and advances valve element 231A against the biasing force of biasing member 233A in one direction along the axis direction of center axis 250A. Piston 246B pushes and advances valve element 231B against the biasing force of biasing member 233B in one direction along the axis direction of center axis 250B.

The P port and the UCL port communicate with each other. The T (a) port and the branch (b) port communicate with each other. The P' port and the CL port communicate with each other.

The oil supplied to the P port is supplied to second hydraulic pressure chamber 82 through the UCL port. When the volume of second hydraulic pressure chamber 82 is expanded by the supply of hydraulic pressure, first piston 61 is slid forward in the axis direction of center axis 106. In response to the sliding of first piston 61, the volume of first hydraulic pressure chamber 81 is decreased. The oil discharged from first hydraulic pressure chamber 81 passes through the CL port, the branch (b) port, and the T (a) port in this order, and is then collected in the oil tank (not shown).

In cutting tool rest 31 of the present embodiment, valve 220 is provided in each of the plurality of tool holding portions 210, actuator 240 is provided at the position corresponding to tool change position J, and valve 220J of tool holding portion 210 positioned at tool change position J is operated by actuator 240. With such a configuration, it is not necessary to provide respective actuators for valves 220 of tool holding portions 210, with the result that the hydraulic pressure supply mechanism for operating clamping mechanism portion 131 can be constructed in a simple manner.

Further, piston 246 is disposed to face valve 220J of tool holding portion 210 positioned at tool change position J in the axis direction of center axis 250 orthogonal to pivoting center axis 102 of cutting tool rest 31, and can push and advance valve element 231 of valve 220J in one direction along the axis direction of center axis 250. With such a configuration, it is possible to readily realize a configuration in which piston 246 and valve element 231 of valve 220 of tool holding portion 210 positioned at tool change position J face each other in response to a pivoting operation of cutting tool rest 31.

It should be noted that in the present embodiment, tool holding portion 210 has been described to which first tool holder 121A that holds a rotary tool and second tool holder 121B that holds a stationary tool can be selectively attached; however, the tool holding portion of the present invention may be capable of holding only a stationary tool.

The embodiments disclosed herein are illustrative and non-restrictive in any respect. The scope of the present invention is defined by the terms of the claims, rather than the description above, and is intended to include any modifications within the scope and meaning equivalent to the terms of the claims.

### INDUSTRIAL APPLICABILITY

The present invention is applied to a cutting tool rest of a machine tool.

### REFERENCE SIGNS LIST

10: machine tool; 11: bed; 16: saddle; 18: automatic tool changer; 21: headstock; 31: cutting tool rest; 32: cutting tool rest base; 33: turret; 34: ring member; 35: loop groove; 36: motor; 37: rotor shaft; 38: engagement groove; 41: air supply portion; 42: air nozzle; 43: first air flow path; 43h: through hole; 44: nozzle insertion hole; 46: air supply source; 50: holder attachment portion; 52: cylinder; 53: cylindrical portion; 53p: first inner peripheral surface; 53q: second inner peripheral surface; 53r: third inner peripheral surface; 54: rear wall portion; 55: communication hole; 56: bearing housing; 57: front housing; 58: holder insertion hole; 61: first piston; 62: recess; 62m: first wall surface; 62n: second wall surface; 63: first facing portion; 64: second facing portion; 65, 72: front stage portion; 66: first intermediate stage portion; 67: second intermediate stage portion; 68, 74: rear stage portion; 70: wall portion; 71: second piston; 73: intermediate stage portion; 76: locking block; 77: bolt; 81: first hydraulic pressure chamber; 82: second hydraulic pressure chamber; 83: third hydraulic pressure chamber; 84: plunger insertion hole; 85: plunger; 87: hydraulic pressure supply source; 91: second bearing; 92: outer ring; 93: roller; 101, 106, 250, 250A, 250B: center axis; 102: pivoting center axis; 121: tool holder; 121A: first tool holder; 121B: second tool holder; 131: clamping mechanism portion; 131G: hydraulic cylinder mechanism portion; 131H: clamping operation portion; 132: drawbar; 132h, 232, 232A, 232B: insertion hole; 133: wedge mechanism portion; 134: sliding member; 135: lever; 136: collet; 141: outer housing; 142: first bearing; 143: inner housing; 144, 174: opening; 145, 175: tool insertion hole; 151, 161: rear member; 152: first connection portion; 153: second air flow path; 162: second connection portion; 163: third air flow path; 171: housing; 210: tool holding portion; 220, 220J: valve; 221: valve main body; 231, 231A, 231B: valve element; 233, 233A, 233B: biasing member; 240: actuator; 241: cylinder main body; 246, 246A, 246B: piston; J: tool change position; K: workpiece processing position.

## Claims

1. A cutting tool rest comprising:
a plurality of tool holding portions that each hold a tool; and
a base provided with the plurality of tool holding portions, the base being operable to move each of the tool holding portions between a plurality of positions including a tool change position for changing the tool and a workpiece processing position for processing a workpiece, wherein
each of the tool holding portions has
a clamping mechanism portion that is operated between a clamping state and an unclamping state when supplied with a hydraulic pressure, the clamping state being a state in which the tool is clamped, the unclamping state being a state in which the tool is unclamped, and
a valve that controls the hydraulic pressure to be supplied to the clamping mechanism portion,
the cutting tool rest further comprising an actuator that operates the valve of the tool holding portion positioned at the tool change position when connected to the tool holding portion positioned at the tool change position.

2. The cutting tool rest according to claim 1, wherein
the base is pivotable with respect to a first axis, and
the plurality of tool holding portions are provided side by side at the base in a peripheral direction of the first axis.

3. The cutting tool rest according to claim 2, wherein
the valve has a valve element that extends with respect to a second axis parallel to the first axis and that switches a hydraulic pressure path when moved reciprocally in an axis direction of the second axis, and
the actuator has a piston that is disposed to face the valve of the tool holding portion positioned at the tool change position in the axis direction of the second axis and that is capable of pushing and advancing the valve element in one direction along the axis direction of the second axis.

4. The cutting tool rest according to any one of claims 1 to 3, wherein
each of the plurality of tool holding portions is capable of holding a rotary tool,
the clamping mechanism portion has
a first piston that is reciprocally moved with respect to a third axis in an axis direction of the third axis when supplied with the hydraulic pressure,
a first facing portion and a second facing portion that face each other in the axis direction of the third axis, and
a locking portion disposed between the first facing portion and the second facing portion,
one of the locking portion and each of the first facing portion and the second facing portion is provided at the first piston,
the first piston is reciprocally moved between a first piston position and a second piston position, the first piston position being a position at which the locking portion and the first facing portion are brought into contact with each other to operate the clamping mechanism portion into the clamping state in which the rotary tool is clamped, the second piston position being a position at which the locking portion and the second facing portion are brought into contact with each other to operate the clamping mechanism portion into the unclamping state in which the rotary tool is unclamped,
the clamping mechanism portion further has a second piston that moves the first piston to a third piston position when supplied with the hydraulic pressure, the third piston position being located between the first piston position and the second piston position in the axis direction of the third axis, and
when the first piston is positioned at the third piston position, the clamping mechanism portion is maintained in the clamping state, and the locking portion is separated from the first facing portion and the second facing portion.

5. The cutting tool rest according to claim 4, wherein the valve controls the hydraulic pressure to be supplied to the clamping mechanism portion so as to position the first piston at the third piston position in a position included in the plurality of positions and except for the tool change position.
